# EUROPÄISCHE PATENTSCHRIFT

(11) **EP 2 117 877 B1**
(45) Veröffentlichungstag und Bekanntmachung des Hinweises auf die Patenterteilung: **18.04.2012**
(21) Anmeldenummer: 08701016.1
(22) Anmeldetag: 08.01.2008
(51) Int. Cl.: B60R 7/04, B60R 11/00, B60R 13/02

(54) **INNENAUSSTATTUNGSTEIL EINES FAHRZEUGS, KRAFTFAHRZEUGTÜR MIT EINEM INNENAUSSTATTUNGSTEIL UND VERFAHREN ZUR HERSTELLUNG EINES INNENAUSSTATTUNGSTEILS**
INTERIOR FITTING PART FOR A VEHICLE, MOTOR VEHICLE DOOR COMPRISING AN INTERIOR FITTING PART, AND METHOD FOR THE PRODUCTION OF AN INTERIOR FITTING PART
PARTIE DE GARNITURE INTÉRIEURE DE VÉHICULE, PORTIÈRE D'AUTOMOBILE MUNIE D'UNE PARTIE DE GARNITURE INTÉRIEURE ET PROCÉDÉ DE PRODUCTION D'UNE PARTIE DE GARNITURE INTÉRIEURE

(30) Priorität: 08.01.2007 DE 102007001224
(43) Veröffentlichungstag der Anmeldung: 18.11.2009
(73) Patentinhaber: Faurecia Innenraum Systeme GmbH, 76767 Hagenbach (DE)
(72) Erfinder: SCHILLES, Wilfried, 76870 Kandel (DE)
(74) Vertreter: Schatt, Markus F.
(86) Internationale Anmeldenummer: PCT/EP2008/000076
(87) Internationale Veröffentlichungsnummer: WO 2008/083946

(56) Entgegenhaltungen:
- DE-A1- 4 223 446
- DE-A1- 4 317 234
- DE-A1- 10 162 096
- DE-A1- 10 333 161
- DE-A1- 19 539 273
- JP-A- 61 098 643

## Beschreibung

Die Erfindung betrifft ein Innenausstattungsteil eines Fahrzeugs, wie z.B. ein Innenverkleidungsteil, eine Sitzrückwand, ein Aufnahmebehälter oder ein Ablagefach in der Seitentür, eine Deckenverkleidungsplatte oder ein Dachhimmel, eine Türverkleidungsplatte, eine Verkleidungsplatte für das hintere Ablagefach oder ein Teil dieser Innenverkleidungsteile. Die Erfindung betrifft auch eine Kraftfahrzeugtür mit einem solchen Innenausstattungsteil. Die Erfindung betrifft außerdem ein Verfahren zur Herstellung eines solchen Innenausstattungsteils.

Die erfindungsgemäße Lösung kann generell in Innenverkleidungsteilen eines Kraftfahrzeugs, die üblicherweise eine Dekorschicht aufweisen, und bevorzugt in Innenverkleidungen von Kraftfahrzeugtüren oder in feststehenden Seitenverkleidungen eingesetzt werden.

Aufnahmebehälter in Innenverkleidungen von Kraftfahrzeugen, insbesondere in Kraftfahrzeugtüren, gehören zur Standardausrüstung bei modernen Kraftfahrzeugen. Diese Aufnahmebehälter wie z.B. Kartentaschen, sind in der Regel feststehende, oben offene Fächer.

Die Aufnahmebehälter nach dem Stand der Technik sind oftmals aus Platzgründen in der Tür ungünstig im unteren Bereich der Türverkleidung platziert und nur schlecht zugänglich für den Benutzer. Durch vielfache Benutzung werden die Kanten solcher Behälter abgenutzt, so dass der geschmackliche Gesamteindruck des Fahrzeug-Innenraums ungünstig ist.

Aus der gattungsbildenden DE 42 23 446 A1 ist ein kaschiertes Fahrzeug-Innenausstattungsteil bekannt, bei dem der Rand der aufkaschierten Folie auf der Rückseite des Ausstattungsteiles zwischen einer Wand und einem Zahn durch Klemmung gehalten wird. Dabei ist ein Verkleben des Rands nicht vorgesehen, da Verunreinigung des Bauteils durch den Klebevorgang aufgrund überschüssigen Klebers vermieden werden sollen.

Ferner ist aus der DE 102 11 615 A1 ein Ablagefach für eine Türinnenverkleidung bekannt, das einen Trägerkörper mit einer Innenschale und einer Außenschale aufweist, die auf der dem Innenraum zugewandten Seite des Tragkörpers auf diesen aufgebracht sind. Die Außenschale und die Innenschale weisen jeweils eine Dekorschicht auf und weisen jeweils einander zugewandte Rippenteile auf, die bei Aufsetzen der Außenschale auf die Innenschale stoffschlüssig unter Ausbildung einer die Außenschale mit der Innenschale verbindenden Rippe miteinander verbunden werden. Dabei wird zur Ausbildung eines Umbugs ein Endabschnitt der Dekorschicht der Außenschale um deren Rand geführt und zwischen Außenschale und Innenschale eingeklemmt.

Aus der DE 40 07 829 A1 ist ein Verfahren zum Herstellen einer Dachverkleidungsplatte für ein Kraftfahrzeug bekannt, die aus einem Substrat und einer auf dessen Vorderseite aufgebrachten Überzugsschicht gebildet ist. Mit einem Randabschnitt der Überzugsschicht ist ein Umbug ausgebildet, in dem der Randabschnitt auf die Rückseite des Substrats des Filzes angelegt und mit Hilfe einer Haftverbindung befestigt wird.

Aus der DE 103 33 161 A1 ist ein verfahren gemäß dem Oberbegriff des Anspruchs 14 bekannt.

Die Aufgabe der Erfindung ist, ein Innenausstattungsteil eines Kraftfahrzeugs mit einer Dekorschicht, eine Kraftfahrzeugtür mit einem solchen Innenausstattungsteil sowie ein Verfahren zur Herstellung eines solchen Innenausstattungsteils bereitzustellen, das in Bezug auf den Verschleiß günstig gestaltet ist. Das Innenausstattungsteil kann insbesondere ein Innenverkleidungsteil oder eine Kartentasche sein.

Die Aufgabe wird durch die Merkmale der unabhängigen Ansprüche gelöst. Weitere Ausführungsbeispiele sind in den auf diese rückbezogenen Unteransprüchen angegeben.

Dabei erstreckt sich der Verlauf des Rands des Randabschnitts der Dekorschicht zwischen zwei Rippen, entlang der Längsrichtung, in der sich die Rippen erstrecken.

Dabei kann die zweite Seite des Wandteils, die bereichsweise von der Dekorschicht überdeckt ist, eine freiliegende Fläche sein.

Der Randabschnitt kann dabei insbesondere liegen zwischen: einer vorderen Rippe, die die zweite Rippe oder eine vom Rand aus gesehen dieser nachfolgende Rippe ist, und einer vom Rand aus gesehen dieser nachfolgenden Rippe.

Dabei kann vorgesehen sein, dass die Dekorschicht die zumindest eine Vertiefung zwischen der ersten und der vorderen Rippe überspannt.

In einem Ausführungsbeispiel können mindestens drei Rippen vorgesehen sein, die zumindest abschnittsweise vom Rand aus gesehen nebeneinander und entlang des Rands verlaufen, wobei sich der Randabschnitt der Dekorschicht in der Vertiefung zwischen der zweiten und der dritten Erhebung erstreckt. Dabei kann weiterhin die Dekorschicht die Vertiefung zwischen der ersten und der zweiten Rippe überspannen.

Die Rippen können Teile eines Einsatzes sein, der auf das Trägerteil aufsetzbar ist. Alternativ können die Rippen einstückig mit dem Wandteil hergestellt sein.

Die Rippen können auf der zweiten Seite derart gestaltet sein, dass die Höhe der Rippen von der Konturfläche der zweiten Seite des Wandteils vom Rand aus und quer zu diesem gesehen abnimmt.

Das Wandteil kann die dem Innenraum zugewandte Seitenwand einer Kartentasche einer Fahrzeug-Seitentür oder einer anderen Ablage sein.

Die Dekorschicht kann aus Leder gebildet sein. Weiterhin kann die Dekorschicht auf dem Wandteil aufgeklebt sein.

Erfindungsgemäß ist auch eine Kraftfahrzeugtür mit einem Innenausstattungsteil nach einer der beschriebenen Ausführungsformen vorgesehen.

Weiterhin ist erfindungsgemäß ein Verfahren zur Herstellung eines solchen Innenausstattungsteils mit einem Trägerteil mit einem Wandteil vorgesehen, das insbesondere aufweist: eine bei einem bestimmungsgemäßen Einbau desselben dem Innenraum zugewandte erste Seite und eine entgegen gesetzt zu dieser gelegene zweite Seite sowie einen sich zwischen diesen erstreckenden Rand, und mit einer auf diesem angeordneten Dekorschicht. Das Herstellungsverfahren hat insbesondere die Schritte:
■ Formung des Innenausstattungsteils mit dem Wandteil und der Dekorschicht mittels eines Pressverform-Werkzeugs mit zwei Werkzeugteilen, die jeweils eine konturgebene Verformungsoberfläche aufweisen,
■ Umlegen des von der ersten Seite (21) auf die zweite Seite umzulegenden, zunächst an der ersten Seite überstehenden Abschnitts der Dekorschicht auf die zweite Seite und Andrücken des überstehenden Abschnitts auf die zweite Seite,
■ Einfahren eines Werkzeugteils in diejenige Vertiefung, in der sich der Randabschnitt der Dekorschicht des herzustellenden Bauteils befinden soll, und Andrücken des entsprechenden Bereichs der Dekorschicht in die Vertiefung,
■ Einfahren eines Messers in die betreffende Vertiefung und Schneiden der Dekorschicht derart, dass der durch den Schneidvorgang entstandene Randabschnitt in der jeweiligen Vertiefung gelegen ist.

Im Folgenden werden die Erfindungen an Hand der beigefügten Figuren beschrieben, die zeigen:
- Figur 1 eine schematische Perspektiv-Darstellung einer Kraftfahrzeug-Tür mit Innenausstattungsteilen vom Innenraum her gesehen;
- Figur 2 eine Schnittdarstellung einer Kartentasche als Ausführungsbeispiel des erfindungsgemäßen Innenausstattungsteils;
- Figur 3 eine Detailansicht der Darstellung der Figur 2.

Die Erfindung betrifft allgemein ein Innenausstattungsteil und insbesondere ein Innenverkleidungsteil eines Fahrzeugs und insbesondere die Kartentasche der Seitentür eines Fahrzeugs oder ein Teilstück einer solchen Kartentasche. Dabei kann das erfindungsgemäße Innenausstattungsteil auch eine Sitzrückwand, ein Aufnahmebehälter oder ein Ablagefach in der Seitentür, eine Deckenverkleidungsplatte oder ein Dachhimmel, eine Türverkleidungsplatte, eine Verkleidungsplatte für das hintere Ablagefach oder ein Teil dieser Innenverkleidungsteile sein. Die folgende Beschreibung der Erfindung an Hand einer Kartentasche einer Fahrzeug-Seitentür ist somit allgemein für Innenausstattungsteile oder Innenverkleidungsteile eines Fahrzeugs.

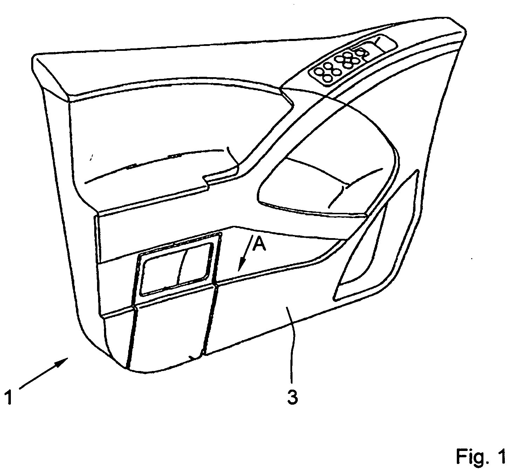

Kraftfahrzeug-Türen (Figur 1, Bezugszeichen 1) sind aus einem Außenblech oder einer Außenverkleidung und einem Innenblech oder Rahmen-Element gebildet, an dem eine Tür-Innenverkleidung angebracht ist. Das Tür-Innenblech stellt die Grenze des Nassraums in Richtung zum Innenraum des Kraftfahrzeuges dar. An dem Tür-Innenblech oder dem Rahmen-Element ist ein Modul-Träger in Form einer Platte vorgesehen, an der Komponenten wie eine Fensterführung, das Tür-Schloss, Fensterheber-Motoren oder ein Kabelbaum befestigt sind. Der Modul-Träger wird dabei auf das Rahmen-Element geschraubt oder genietet.

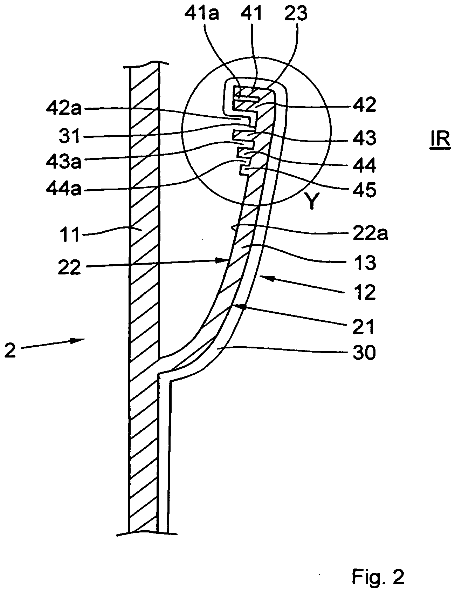

Das Innenverkleidungsteil ist aus einem Trägerteil 2 gebildet und weist üblicherweise eine Kartentasche 3 auf, die in der Figur 2 als schematische Schnittdarstellung gezeigt ist. Zur Ausbildung der Kartentasche 3 weist das Trägerteil 2 ein Basisteil 11 und ein Wandteil 12 in Form einer Taschenwand 13 auf, die sich von dem Basisteil 11 aus erstreckt und von diesem absteht, so dass zwischen dem Basisteil 11 und dem Wandteil 12 ein Aufnahmeraum A insbesondere zum Aufbewahren von Gegenständen gelegen ist.

Das Innenausstattungsteil weist ein Trägerteil 2 mit einem Wandteil 12 auf, das eine erste Seite 21 und eine entgegen gesetzt zu dieser gelegene zweite Seite oder Rückseite 22 sowie einen sich zwischen diesen erstreckenden Rand 23 aufweist. Das Innenausstattungsteil kann insbesondere derart im Inneren des Kraftfahrzeugs vorgesehen sein, dass dieses bei dem bestimmungsgemäßen Einbau in das Kraftfahrzeug eine dem Innenraum IR zugewandte erste Seite 21 und eine entgegen gesetzt zu dieser gelegene, d.h. dem Innenraum IR abgewandte zweite Seite 22 sowie den sich zwischen diesen erstreckenden Rand 23 hat. Der Rand 23 ist Teil und das äußere Ende eines abschnittsweise freiliegenden Endabschnitts des Wandteils 12.

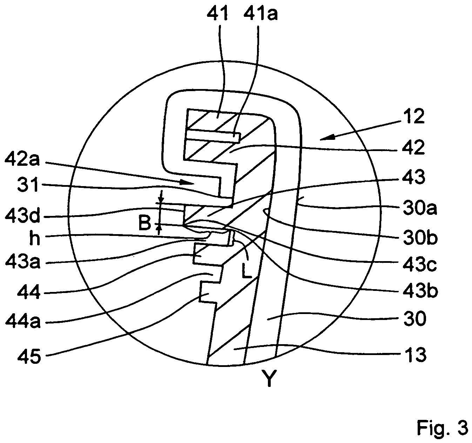

Das Wandteil 12 bzw. die Taschenwand 13 ist mit einer Dekorschicht 30 überzogen. Die Dekorschicht 30 überdeckt zumindest bereichsweise die erste Seite 21 des Wandteils 12. Die Dekorschicht kann auch einen Bereich der dem Innenraum IR zugewandten Seite des Basisteils 11 überdecken. Erfindungsgemäß erstreckt sich die Dekorschicht 30 im Querschnitt des Wandteils 12 gesehen (Figuren 2 und 3) von der ersten Seite 21 des Trägerteils 2 über den Rand 23 hinaus und teilweise über die zweite Seite 22 des Trägerteils 2. Ein Randabschnitt der Dekorschicht 30 ist somit auf die zweite Seite 22 des Trägerteils 2 umgelegt.

Die dem Insassen abgewandte Seite des Wandteils weist zumindest zwei längliche Erhebungen oder Rippen 40 auf, die vom Rand 23 aus gesehen nebeneinander und entlang des Rands 23, also parallel oder schräg zu diesem verlaufen. Dementsprechend bildet sich zwischen jeweils zwei länglichen Erhebungen eine Vertiefung oder Nut aus. In den Figuren 2 und 3 ist ein Wandteil 12 mit fünf länglichen Erhebungen 41, 42, 43, 44, 45 mit vier zwischen diesen ausgebildeten Vertiefungen 41a, 42a, 43a, 44a dargestellt. Die Erhebungen erstrecken sich zumindest abschnittsweise entlang des Rands 23 und sind Ausformungen des Wandteils 12. Alternativ dazu können die Erhebungen als Teile eines Einsatzes auf das Trägerteil oder eine entsprechende Ausnehmung desselben aufgesetzt sein.

Erfindungsgemäß ist die Anordnung der Dekorschicht 30 derart vorgesehen, dass diese - ausgehend von der dem Insassen zugewandten Seite 21 - zumindest abschnittsweise die Randlinie 23 umläuft und mit seinem Randabschnitt 31 auf der Insassen abgewandten Seite 22 zwischen den zwei Erhebungen der Mehrzahl von Erhebungen endet. Der Randabschnitt 31 kann dabei insbesondere liegen zwischen einer vorderen Erhebung, die die zweite Erhebung 42 oder eine vom Rand aus gesehen dieser nachfolgende Erhebung ist, und einer vom Rand aus gesehen dieser nachfolgenden Erhebung (z.B. 43). Die Dekorschicht 30 weist eine A-Oberfläche 30a, die zur Außenseite gerichtet ist, und eine B-Oberfläche 30b auf, die am Wandteil 12 anliegt und vorzugsweise auf die Oberfläche des Wandteils 12 aufgeklebt ist.

Die Dekorschicht 30 ist von der ersten Seite 21 aus über den Rand 23 auf die zweite Seite 22 umgelegt und ein Randabschnitt der Dekorschicht 30 erstreckt sich zwischen zwei Erhebungen auf der zweiten Seite 22. In der Darstellung der Figuren 2 und 3 sind dies die Erhebungen 42 und 43. Dabei ist die Dekorschicht 30 derart geformt, dass dessen Rand bei dessen Anlage auf der zweiten Seite 22 des Wandteils 12 abschnittsweise in der sich zwischen zwei Erhebungen befindlichen Vertiefung verläuft.

Durch dieses erfindungsgemäße Merkmal wird erreicht, dass bei einer normalen Benutzung der Kartentasche, oder allgemein des Innenausstattungsteils mit dem Wandteil 12, der zwischen den zwei Erhebungen liegende Randabschnitt 31 der Dekorschicht 30 nicht berührt wird. Dadurch wird die Gefahr, dass sich die Dekorschicht an seinem Randbereich von dem Wandteil 12 und somit von dem Innenaustattungsteil aufgrund einer bei der Benutzung des Innenaustattungsteils oftmals auftretenden manuellen Berührung des äußeren Randbereichs des Wandteils 12 ablöst, minimiert.

Die Erhebungen verlaufen winklig oder parallel entlang eines Abschnitts des Rands 41 des Wandteils 12 und erheben sich im Querschnitt des Wandteils 12 gesehen vom Verlauf einer Konturoberfläche 22a der zweiten Seite 22 des Wandteils 12 ab.

Bei einem Ausführungsbeispiel der Erfindung können für die vorgesehenen Anwendungsfälle die Größe der Vertiefung (im Folgenden beispielsweise die Vertiefung 42a), in der der Randabschnitt 31 der Dekorschicht 30 verläuft, und die Höhe h der Erhebung 42, die von der Vertiefung aus gesehen näher am Rand 23 gelegen ist, vorgesehen sein, dass die Höhe h, mit der sich die jeweilige Erhebung 41, 42, 43, 44, 45 von der Konturoberfläche 22a des Wandteils 12 abhebt, das 1,0fache bis 1,5fache der Breite der jeweiligen Erhebung des Wandteils 12 neben der jeweiligen Vertiefung beträgt. Zur Ermittlung der Höhe h der Erhebung wird dabei vorzugsweise der Abstand der an der Vertiefung liegenden Kante 43b bis zur Kante 43c der Oberseite 43d der Erhebung 43 an der Seite der jeweiligen Vertiefung 43a verwendet. Weiterhin kann die Konturoberfläche 22a im Querschnitt, also quer zur Längsrichtung des Rands 23 oder der Erhebungen gesehen, als eine gedachte, die Erhebungen durchschneidende Linie angesehen werden.

In diesem oder einem alternativen Ausführungsbeispiel beträgt die quer zur Längsrichtung des Rands 23 oder der Erhebungen verlaufende Länge L der Vertiefung zwischen 5 mm und 9 mm und/oder beträgt die Höhe der Erhebung zwischen 4 mm bis 20 mm. Die Länge L der Vertiefung wird vorzugsweise auf der Linie oder Kurve ermittelt, die die Kantenlinien auf der Oberseite (z.B. die Kante 23d) senkrecht schneidet.

Die Erhebungen können derart gestaltet sein, dass sich die Höhe h jeder Erhebung über der Konturfläche 22a der zweiten Seite 22 des Wandteils 12 von Erhebung zu Erhebung vom Rand 23 aus, d.h. quer zu diesem gesehen, verringern. Dies gilt einschließlich der ersten Erhebung und zumindest ab der zweiten Erhebung. In speziellen Anwendungen kann die Verringerung der Höhen h der Erhebungen erst ab einer vom Rand 23 aus gesehen weiter hinten gelegenen Erhebung eintreten, solange die Verringerung noch bei mindestens der Erhebungen realisiert ist.

Generell werden die vorgenannten Maßzahlen in einem mittleren Bereich des Randes und der Erhebungen gemessen.

Die zweite Seite 22 des Wandteils 12, die bereichsweise von der Dekorschicht 30 überdeckt ist, ist vorzugsweise eine freiliegende Fläche, d.h. das Wandteil 12 ist nicht mit einer weiteren, die Dekorschicht 30 auf der zweiten Seite 22 des Wandteils 12 überdeckenden Schicht oder Abdeckung versehen.

In einem weiteren Ausführungsbeispiel überspannt die Dekorschicht 30 die Vertiefung 41 a zwischen der ersten 41 und der zweiten 42 Erhebung vom Rand 23 des Wandteils 12 aus gesehen (Blickrichtung der Figuren 2 und 3). Weiterhin kann die Dekorschicht 30 sämtliche Vertiefungen der Erhebungen überspannen, die zwischen dem Rand 23 des Wandteils 12 und dem Randabschnitt 31 der Dekorschicht 30 gelegen sind. Alternativ dazu können einige oder sämtliche der Erhebungen auf der zweiten Seite 22 durch ein Schalenteil oder eine andere Abdeckung überdeckt sein.

Es sind mindestens drei Erhebungen vorgesehen, die zumindest abschnittsweise vom Rand 23 aus gesehen nebeneinander und entlang des Rands 23 verlaufen.

Das Trägerteil und insbesondere das Wandteil 12 ist, zumindest soweit es für eine formbeständige Gestalt des Innenverkleidungsteils und insbesondere des Aufnahmebehälters erforderlich ist, aus einem festen, formbeständigen Material gebildet. Dies kann zum Beispiel ein dem Fachmann bekannter für einen Spritzgussprozess zu deren Herstellung geeigneter Kunststoff sein. Als Kunststoff-Material kommen dabei zum Beispiel Polypropylen PP, eine Mischung aus PP und EPDM (PP/EPDM T20), ABS (Acrylnitril-Butadien-Styrol-Copolymerisat Kunststoff), ABS-PC (ABS mit Polycarbonat-Anteilen) oder PA (Polyamide) und generell thermoplastische Kunststoffe in Betracht. Auch kann als Material für das Trägerteil ein Naturfaser-Material mit Verstärkungsteilen wie Kunststoff-Material oder HolzfaserMaterial oder ein Metall verwendet werden.

Die Dekorschicht 30 kann aus einer Schicht oder aus mehreren Schichten gebildet sein und ist vorzugsweise auf das Trägerteil aufgeklebt. Die Dekorschicht kann insbesondere dazu vorgesehen sein, Haptik-Eigenschaften des Endproduktes oder des Innenausstattungsteils auf dessen Außenseite vorzusehen, die vorgegebenen Anforderungen entsprechen.

In einem Ausführungsbeispiel ist die Dekorschicht zweischichtig gebildet. Bei der Bildung der Dekorschicht aus zwei oder mehr als zwei Schichten kann die Dekorschicht eine Deckschicht und eine von der Sichtseite her gesehen darunter liegende Schaumschicht aufweisen. In einem Ausführungsbeispiel ist die Deckschicht aus PVC oder aus TPO oder einer Kombination dieser Materialien und die Schaumschicht aus PVC, PP, PE, einer weichen Einlegerschicht aus Polyester oder einer Kombination dieser Materialien gebildet. Auch kann für die Schaumschicht ein auf Polyurethan (PU) aufbauender Schaum verwendet werden. Beispielsweise kann die Dekorschicht ein Verbund aus textilen Materialien, einem Schaum und einem VliesMaterial sein.

Auch kann für die Dekorschicht ein textiles Gewebe, ein Schaum-Kunstleder, eine Kunststoff-Folie oder ein Leder verwendet werden. Diese Materialien können eine einzige Schicht der Dekorschicht oder eine Deckschicht einer mehrschichtigen Dekorschicht bilden. Bei der Verwendung eines textilen Geleges als Dekorschicht kann als Ausgangsmaterial das textile Gelege oder eine Folie oder eine Kombination aus beiden verwendet werden.

Die Deckschicht kann insbesondere eine Dicke von 0,3 mm bis 0,7 mm und die Schaumschicht eine Dicke von 0,7 mm bis 2,5 mm haben.

Das Wandteil muss kein von einem Basisteil abstehendes Teil sein, sondern kann Teil des Basisteils sein, wenn es eine einem angenommenen Insassen zugewandte Seite 21, einem dem Insassen abgewandte Seite 22 und eine dem Insassen zugewandte Randlinie 23 aufweist.

Das Basisteil kann z.B. die Ablageplatte einer unter dem Handschuhfach angeordneten Ablagefachs oder ein Fach im Handschuhfach sein. Vorzugsweise ist die dem Insassen abgewandte Seite 22 eine Seite des Wandteils, die er in normaler Sitzposition nicht sieht. Allgemein hat also die dem Insassen abgewandte Seite des Basisteils zumindest zwei längliche Erhebungen, die entlang der Randlinie verlaufen und die Dekorschicht umläuft zumindest abschnittsweise von der dem Insassen zugewandten Seite aus die Randlinie und endet auf der Insassen abgewandten Seite zwischen zwei Erhebungen.

Die Herstellung des erfindungsgemäßen Innenausstattungsteils kann folgendermaßen erfolgen: Das Innenausstattungsteil wird mittels eines Pressverform-Werkzeugs mit zwei Werkzeugteilen, die jeweils eine konturgebene Verformungsoberfläche aufweisen, geformt und der überstehende und von der ersten Seite 21 auf die zweite Seite 22 umzulegende, zunächst an der ersten Seite 21 überstehende Abschnitt der Dekorschicht 30 auf die zweite Seite 22 umgelegt und auf die zweite Seite 22 angedrückt. Das Umlegen kann durch Vorsehen eines entsprechenden Unterdrucks im Pressverform-Werkzeug, durch den der überstehende Abschnitt in das Pressverform-Werkzeug eingezogen wird und/oder durch Eingreifen mit einem speziellen Werkzeug erfolgen. Nach dem Umlegen fährt ein Werkzeugteil oder ein Stempel in die Vertiefung ein, in der sich der Randabschnitt 31 des herzustellenden Bauteils befinden soll, und drückt den entsprechenden Bereich der Dekorschicht 30 in die Vertiefung. Anschließend fährt ein Messer in diese Vertiefung ein und schneidet die Dekorschicht 30 derart, dass diese auf der zweiten Seite 22 derart endet, dass der durch den Schneidvorgang entstandene Randabschnitt 31 in der jeweiligen Vertiefung gelegen ist. Das Messer kann an dem Werkzeugteil oder dem Stempel derart angeordnet sein, dass das Messer durch dieses hindurch fährt, um den Schneidvorgang zur Ausbildung des Randabschnitts 31 auszuführen. Alternativ kann das Messer Teil einer Schneidvorrichtung sein, so dass das Werkzeugteil oder ein Stempel erst aus der Vertiefung herausgefahren werden muss und erst anschließend das Messer betätigt und die Vertiefung eingefahren wird.

## Patentansprüche

1. Innenausstattungsteil eines Fahrzeugs mit einem Wandteil (12), das bei einem bestimmungsgemäßen Einbau desselben eine dem Innenraum (IR) zugewandte erste Seite (21) und eine entgegen gesetzt zu dieser gelegene zweite Seite (22) sowie einen sich zwischen diesen erstreckenden Rand (23) aufweist, und mit einer auf diesem Wandteil (12) angeordneten Dekorschicht (30), wobei ein Randabschnitt der Dekorschicht (30) auf die zweite Seite (22) umgelegt ist,
**dadurch gekennzeichnet, dass**
die zweite Seite (22) zumindest zwei längliche Rippen (40; 41, 42, 43, 44, 45) aufweist, die unter Ausbildung einer zwischen diesen ausgebildeten Vertiefung (41a, 42a, 43a, 44a) nebeneinander und entlang des Randes (23) verlaufen, und
der über den Rand (23) auf die zweite Seite (22) umgelegte Abschnitt der Dekorschicht (30) zwischen zwei Rippen (41, 42) auf der zweiten Seite (22) endet, wobei ein Randabschnitt (31) des umgelegten Abschnitts der Dekorschicht (30) zwischen zwei Rippen (42, 43) unter Freilassung eines Spalts zwischen dem Randabschnitt (31) und der dem Randabschnitt (31) zugewandten Innenfläche der benachbarten Rippe (43) verläuft.

2. Innenausstattungsteil nach dem Anspruch 1, **dadurch gekennzeichnet, dass** die Dekorschicht (30) auf das Wandteil (12) aufgeklebt und/oder mittels eines Pressverformverfahrens auf das Wandteil (12) aufgepresst ist.

3. Innenausstattungstei! nach dem Anspruch 1 oder 2, **dadurch gekennzeichnet, dass** die Höhe (h) der Rippe (42), die von derjenigen Vertiefung (42a) aus gesehen, in der der Randabschnitt (31) der Dekorschicht (30) verläuft, näher am Rand (23) gelegen ist, gegenüber der Konturoberfläche (22a) des Wandteils (12) das 1,0fache bis 1,5fache der Breite der Rippe (42) beträgt.

4. Innenausstattungsteil nach einem der vorangehenden Ansprüche, **dadurch gekennzeichnet, dass** die quer zur Längsrichtung der Rippe verlaufende Länge (L) der Vertiefung, in der der Randabschnitt (31) des umgelegten Abschnitts der Dekorschicht (30) verläuft, zwischen 5 mm und 9 mm und/oder die Höhe der Rippe (42) zwischen 4 mm bis 20 mm beträgt.

5. Innenausstattungsteil nach einem der vorangehenden Ansprüche, **dadurch gekennzeichnet, dass** der Randabschnitt (23) liegt zwischen: einer vorderen Rippe, die die zweite Rippe (42) oder eine vom Rand aus gesehen dieser nachfolgende Rippe (43, 44) ist, und einer vom Rand (23) aus gesehen dieser nachfolgenden Rippe.

6. Innenausstattungsteil nach dem Anspruch 5, **dadurch gekennzeichnet, dass** die Dekorschicht die zumindest eine Vertiefung (41a) zwischen der ersten (41) und der vorderen Rippe (42, 43, 44) überspannt.

7. Innenausstattungsteil nach einem der vorangehenden Ansprüche, **dadurch gekennzeichnet, dass** mindestens drei Rippen vorgesehen sind, die zumindest abschnittsweise vom Rand (23) aus gesehen nebeneinander und entlang des Rands (23) verlaufen und sich der Randabschnitt (31) der Dekorschicht (30) in der Vertiefung (42a) zwischen der zweiten und der dritten Rippe (42, 43) erstreckt.

8. Innenausstattungsteil nach dem Anspruch 7, **dadurch gekennzeichnet, dass** die Dekorschicht die Vertiefung (41 a) zwischen der ersten (41) und der zweiten (42) Rippe überspannt.

9. Innenausstattungsteil nach einem der vorangehenden Ansprüche, **dadurch gekennzeichnet, dass** die Rippen als Einsatz auf das Wandteil aufgesetzt sind.

10. Innenausstattungsteil nach einem der vorangehenden Ansprüche, **dadurch gekennzeichnet, dass** die Höhe der Rippen bezüglich der Konturfläche (22a) der zweiten Seite (22) des Wandteils (12) vom Rand (23) aus gesehen abnimmt.

11. Innenausstattungsteil nach einem der voranstehenden Ansprüche, **dadurch gekennzeichnet, dass** das Wandteil (12) die dem Innenraum zugewandte Seitenwand einer Kartentasche einer Fahrzeug-Seitentür (1) oder einer anderen Ablage ist.

12. Innenausstattungsteil nach einem der vorangehenden Patentansprüche, **dadurch gekennzeichnet, dass** die Dekorschicht (30) aus Leder gebildet ist.

13. Kraftfahrzeugtür mit einem Innenausstattungsteil nach einem der voranstehenden Ansprüche.

14. Verfahren zur Herstellung eines Innenausstattungsteils mit einem Trägerteil (2) mit einem Wandteil (12) , das bei einem bestimmungsgemäßen Einbau desselben eine dem Innenraum (IR) zugewandte erste Seite (21) und eine entgegen gesetzt zu dieser gelegene zweite Seite (22) sowie einen sich zwischen diesen erstreckenden Rand (23) aufweist, und mit einer auf diesem Wandteil (12) angeordneten Dekorschicht (30), mit den Schritten:
■ Formung des Innenausstattungsteils mit dem Wandteil (12) und der Dekorschicht (30) mittels eines Pressverform-Werkzeugs mit zwei Werkzeugteilen, die jeweils eine konturgebene Verformungsoberfläche aufweisen,
■ Umlegen des von der ersten Seite (21) auf die zweite Seite (22) umzulegenden, zunächst an der ersten Seite (21) überstehenden Abschnitts der Dekorschicht (30) auf die zweite Seite (22) und Andrücken des überstehenden Abschnitts auf die zweite Seite (22), **gekennzeichnet durch** die weiteren Schritte:
■ Einfahren eines Werkzeugteils in diejenige Vertiefung, in der sich der Randabschnitt (31) der Dekorschicht (30) des herzustellenden Bauteils befinden soll, und Andrücken des entsprechenden Bereichs der Dekorschicht (30) in die Vertiefung,
■ Einfahren eines Messers in die betreffende Vertiefung und Schneiden der Dekorschicht (30) derart, dass der **durch** den Schneidvorgang entstandene Randabschnitt (31) in der jeweiligen Vertiefung gelegen ist.

## Claims

1. An interior trim part of a vehicle with a wall part (12), which with an installation thereof in accordance with the provisions has a first side (21) facing the interior (IR) and a second side (22) situated opposed thereto, and an edge (23) extending between these, and with a decorative layer (30) arranged on the wall part (12), wherein an edge section of the decorative layer (30) is folded over onto the second side (22),
**characterized in that**
the second side (22) has at least two elongated ribs (40; 41, 42, 43, 44, 45), which, with the formation of a depression (41 a, 42a, 43a, 44a) formed between these, run adjacent to each other and along the edge (23), and
the section of the decorative layer (30) folded over the edge (23) onto the second side (22) ends between two elevations (41, 42) on the second side (22), wherein an edge section (31) of the folded over section of the decorative layer (30) runs between two ribs (42, 43), leaving a gap free between the edge section (31) and the inner surface of the adjacent rib (43) facing the edge section (31).

2. The interior trim part according to Claim 1, **characterized in that** the decorative layer (30) is glued onto the wall part (12) and/or is pressed by means of a press-forming tool onto the wall part (12).

3. The interior trim part according to Claim 1 or 2, **characterized in that** the height (h) of the rib (42) which, viewed from the depression (42a) in which the edge section (31) of the decorative layer (30) runs, is situated closer to the edge (23), with respect to the contour surface (22a) of the wall part (12), is 1.0 times to 1.5 times the width of the respective rib (42).

4. The interior trim part according to any of the preceding claims, **characterized in that** the length (L) of the depression running transversely to the longitudinal section of the rib, in which the edge section (31) of the folded over section of the decorative layer (30) runs, is between 5 mm and 9 mm and/or the height of the rib (42) is between 4 mm to 20 mm.

5. The interior trim part according to any of the preceding claims, **characterized in that** the edge section (23) lies between: a front rip which is the second rip (42) or a rib (43, 44) following this, viewed from the edge, and a rib following this, viewed from the edge (23).

6. The interior trim part according to Claim 5, **characterized in that** the decorative layer spans the at least one depression (41 a) between the first (41) and the front rib (42, 43, 44).

7. The interior trim part according to any of the preceding claims, **characterized in that** at least three ribs are provided which, at least partially viewed from the edge (23) run adjacent to each other and along the edge (23) and the edge section (31) of the decorative layer (30) extends in the depression (42a) between the second and the third rib (42, 43).

8. The interior trim part according to Claim 7, **characterized in that** the decorative layer spans the depression (41 a) between the first (41) and the second (42) rib.

9. The interior trim part according to any of the preceding claims, **characterized in that** the ribs are placed as an insert onto the wall part.

10. The interior trim part according to any of the preceding claims, **characterized in that** the height of the ribs decreases from the contour surface (22a) of the second side (22) of the wall part (12) viewed from the edge (23).

11. The interior trim part according to any of the preceding claims, **characterized in that** the wall part (12) is the side wall, facing the interior, of a map pocket of a vehicle side door (1) or of another compartment.

12. The interior trim part according to any of the preceding claims, **characterized in that** the decorative layer (30) is formed from leather.

13. A vehicle door with an interior trim part according to any of the preceding claims.

14. A method for the production of an interior trim part with a carrier part (2) with a wall part (12) which with an installation thereof in accordance with the provisions has a first side (21) facing the interior (IR) and a second side (22) opposed thereto, and also an edge (23) extending between these, and with a decorative layer (30) arranged on the wall part (12), with the steps:
■ forming the interior trim part with the wall part (12) and the decorative layer (30) by means of a press-forming tool with two tool parts, which respectively have a shaping deformation surface,
■ folding over the section of the decorative layer (30), to be folded over from the first side (21) onto the second side (22), firstly projecting on the first side (21), onto the second side (22) and pressing of the projecting section onto the second side (22),
**characterized by** the further steps:
■ moving a tool part into the depression in which the edge section (31) of the decorative layer (30) of the component which is to be produced is to be situated, and pressing the corresponding region of the decorative layer (30) into the depression,
■ moving a blade into the respective depression and cutting the decorative layer (30) such that the edge section (31) produced by the cutting process is situated in the respective depression.

## Revendications

1. Partie de garniture intérieure d'un véhicule comprenant une partie de paroi (12), qui présente, avec un montage correct de celle-ci, un premier côté (21) tourné vers l'habitacle (IR) et un second côté (22) placé de façon opposée au premier côté ainsi qu'un bord (23) s'étendant entre ces côtés, et une couche de décor (30) disposée sur cette partie de paroi (12), un tronçon de bordure de la couche de décor (30) étant rabattu sur le second coté (22), **caractérisée en ce que**
le second côté (22) présente au moins deux nervures (40 ; 41, 42, 43, 44, 45) allongées, qui sont agencées les unes à côté des autres et le long du bord (23) en formant une cavité (41a, 42a, 43a, 44a) formée entre ces nervures, et
la partie, rabattue par-dessus le bord (23) sur le second côté (22), de la couche de décor (30) se termine entre deux nervures (41, 42) sur le second côté (22), une partie de bord (31) de la partie rabattue de la couche de décor (30) étant agencée entre deux nervures (42, 43) en laissant une fente entre la partie de bord (31) et la surface intérieure, tournée vers la partie de bord (31), de la nervure (43) voisine.

2. Partie de garniture intérieure selon la revendication 1, **caractérisée en ce que** la couche de décor (30) est collée sur la partie de paroi (12) et/ou est pressée au moyen d'un procédé de déformation par pression sur la partie de paroi (12).

3. Partie de garniture intérieure selon la revendication 1 ou 2, **caractérisée en ce que** la hauteur (h) de la nervure (42), qui, vue à partir de la cavité (42a), dans laquelle la partie de bord (31) de la couche de décor (30) est agencée, est située plus près du bord (23), représente par rapport à la surface de contour (22a) de la partie de paroi (12) 1 fois à 1,5 fois la largeur de la nervure (42).

4. Partie de garniture intérieure selon l'une des revendications précédentes, **caractérisée en ce que** la longueur (L), agencée transversalement à la direction longitudinale de la nervure, de la cavité, dans laquelle la partie de bord (31) de la partie rabattue de la couche de décor (30) est agencée, se situe entre 5 mm et 9 mm et/ou la hauteur de la nervure (42) entre 4 mm et 20 mm.

5. Partie de garniture intérieure selon l'une des revendications précédentes, **caractérisée en ce que** la partie de bord (23) se situe entre une nervure avant, qui est la seconde nervure (42) ou une nervure (43, 44) faisant suite à la seconde nervure, vue à partir du bord, et une nervure faisant suite à la nervure précédente, vue à partir du bord (23).

6. Partie de garniture intérieure selon la revendication 5, **caractérisée en ce que** la couche de décor recouvre la au moins une cavité (41a) entre la première nervure (41) et la nervure avant (42, 43, 44).

7. Partie de garniture intérieure selon l'une des revendications précédentes, **caractérisée en ce qu'**il est prévu au moins trois nervures, qui sont agencées au moins par endroits, vues à partir du bord (23), les unes à côté des autres et le long du bord (23) et la partie de bord (31) de la couche de décor (30) s'étendant dans la cavité (42a) entre la seconde et la troisième nervure (42, 43).

8. Partie de garniture intérieure selon la revendication 7, **caractérisée en ce que** la couche de décor recouvre la cavité (41a) entre la première nervure (41) et la seconde nervure (42).

9. Partie de garniture intérieure selon l'une des revendications précédentes, **caractérisée en ce que** les nervures sont posées comme insert sur la partie de paroi.

10. Partie de garniture intérieure selon l'une des revendications précédentes, **caractérisée en ce que** la hauteur des nervures diminue par rapport à la surface de contour (22a) du second côté (22) de la partie de paroi (12), vue à partir du bord (23).

11. Partie de garniture intérieure selon l'une des revendications précédentes, **caractérisée en ce que** la partie de paroi (12) est la partie de paroi, tournée vers l'habitacle, d'une poche à cartes d'une porte latérale de véhicule (1) ou d'un autre vide-poches.

12. Partie de garniture intérieure selon l'une des revendications précédentes, **caractérisée en ce que** la couche de décor (30) est formée à base de cuir.

13. Porte de véhicule comprenant une partie de garniture intérieure selon l'une des revendications précédentes.

14. Procédé pour fabriquer une partie de garniture intérieure avec une partie portante (2) avec une partie de paroi (12), qui présente avec un montage correct de celle-ci un premier côté (21) tourné vers l'habitacle (IR) et un second côté (22), situé en face du premier, ainsi qu'un bord (23) s'étendant entre ces côtés, et une couche de décor (30) disposée sur cette partie de paroi (12), présentant les étapes suivantes :
• formage de la partie de garniture intérieure avec la partie de paroi (12) et la couche de décor (30) au moyen d'un outil de déformation par pression avec deux parties d'outil, qui présentent chacune une surface de déformation donnée par contour,
• rabattement de la partie de la couche de décor (30), qui est à rabattre du premier côté (21) sur le second côté (22), en dépassant d'abord sur le premier côté (21), sur le second côté (22) et appui de la partie débordante sur le second côté (22), **caractérisé par** les autres étapes :
• introduction d'une partie d'outil dans la cavité, où la partie de bord (31) de la couche de décor (30) de l'élément à fabriquer doit se trouver, et appui de la zone correspondante de la couche de décor (30) dans la cavité,
• introduction d'un couteau dans la cavité concernée et découpe de la couche de décor (30), de telle sorte que la partie de bord (31) se formant par le procédé de coupe est posée dans la cavité respective.
